# EUROPÄISCHE PATENTSCHRIFT

(11) **EP 3 577 010 B1**
(45) Veröffentlichungstag und Bekanntmachung des Hinweises auf die Patenterteilung: **14.07.2021**
(21) Anmeldenummer: 18704430.0
(22) Anmeldetag: 23.01.2018
(51) Int. Cl.: F16C 19/06, B62D 1/181

(54) **MOTORISCH VERSTELLBARE LENKSÄULE FÜR EIN KRAFTFAHRZEUG**
MOTOR-ADJUSTABLE STEERING COLUMN FOR A MOTOR VEHICLE
COLONNE DE DIRECTION À POSITIONNEMENT MOTORISÉ POUR VÉHICULE AUTOMOBILE

(30) Priorität: 01.02.2017 DE 102017201594
(43) Veröffentlichungstag der Anmeldung: 11.12.2019
(73) Patentinhaber: thyssenkrupp Presta AG, 9492 Eschen (LI); thyssenkrupp AG, 45143 Essen (DE)
(72) Erfinder: SCHACHT, Arne, 6800 Feldkirch (AT); SPECHT, Jean-Pierre, 9469 Haag (CH); HUBER, Sebastian, 6811 Göfis (AT)
(74) Vertreter: thyssenkrupp Intellectual Property GmbH
(86) Internationale Anmeldenummer: PCT/EP2018/051543
(87) Internationale Veröffentlichungsnummer: WO 2018/141581

(56) Entgegenhaltungen:
- EP-A1- 1 736 395
- EP-A2- 0 834 437
- DE-A1-102011 083 190
- US-A1- 2015 232 117

## Beschreibung

### Stand der Technik

Die Erfindung betrifft eine motorisch verstellbare Lenksäule für ein Kraftfahrzeug, mit einer Trageinheit, die an einer Fahrzeugkarosserie anbringbar ist, und von der eine Stelleinheit gehalten ist, in der eine Lenkspindel um eine Längsachse drehbar gelagert ist, und mit einem Verstellantrieb, der mit der Trageinheit und mit der Stelleinheit verbunden ist, und von dem die Stelleinheit relativ zur Trageinheit verstellbar ist, wobei der Verstellantrieb eine Antriebseinheit und eine in eine Spindelmutter eingreifende Gewindespindel mit einer Gewindespindelachse aufweist, wobei die Gewindespindel und die Spindelmutter durch die Antriebseinheit um die Gewindespindelachse relativ zueinander drehend antreibbar sind.

Lenksäulen für Kraftfahrzeuge weisen eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist um ihre Längsachse in einer Stelleinheit drehbar gelagert, die von einer Trageinheit an der Fahrzeugkarosserie gehalten ist. Dadurch, dass die Stelleinheit in einer mit der Trageinheit verbundenen Mantel-einheit, auch als Führungskasten oder Kastenschwinge bezeichnet, in Richtung der Längsachse teleskopartig verschiebbar aufgenommen ist, kann eine Längenverstellung erfolgen. Eine Höhenverstellung kann dadurch realisiert werden, dass die Stelleinheit oder eine diese aufnehmende Manteleinheit schwenkbar an der Trageinheit gelagert ist. Die Verstellung der Stelleinheit in Längen- bzw. Höhenrichtung ermöglicht die Einstellung einer ergonomisch komfortablen Lenkradposition relativ zur Fahrerposition in Betriebsstellung, auch als Fahr- oder Bedienposition bezeichnet, in der ein manueller Lenkeingriff erfolgen kann.

Es ist im Stand der Technik bekannt, zur Verstellung der Stelleinheit relativ zur Trageinheit einen motorischen Verstellantrieb mit einer Antriebseinheit vorzusehen, die einen elektrischen Stellmotor umfasst, der - in der Regel über ein Getriebe - mit einem Spindeltrieb verbunden ist, der eine in eine Spindelmutter eingeschraubte Gewindespindel umfasst. Durch die Antriebseinheit sind die Gewindespindel und die Spindelmutter gegeneinander um die Gewindespindelachse drehend antreibbar, wodurch diese je nach Drehrichtung translatorisch aufeinander zu oder voneinander weg bewegt werden können. In einer ersten Ausführungsform ist die Gewindespindel von der Antriebseinheit, die feststehend mit der Stelleinheit oder der Trageinheit verbunden ist, um ihre Gewindespindelachse drehend antreibbar und greift in die Spindelmutter ein, die an der Trageinheit oder der Stelleinheit bezüglich Drehung um die Gewindespindelachse feststehend angebracht ist. In Richtung der Gewindespindelachse stützt sich die Gewindespindel an der Trageinheit oder der Stelleinheit ab, und die Spindelmutter entsprechend an der Stelleinheit oder der Trageinheit, so dass ein rotatorischer Antrieb der Gewindespindel eine translatorische Verstellung von Trageinheit und Stelleinheit relativ zueinander bewirkt. In einer zweiten, alternativen Ausführungsform ist die Gewindespindel bezüglich Drehung um ihre Gewindespindelachse unverdrehbar mit der Trageinheit oder der Stelleinheit gekoppelt und die Spindelmutter ist drehbar, aber in Richtung der Gewindespindelachse feststehend entsprechend an der Stelleinheit oder der Trageinheit gelagert. Wie in der ersten Ausführungsform stützt sich in Richtung der Gewindespindelachse die Gewindespindel an der Trageinheit oder der Stelleinheit ab, und die Spindelmutter entsprechend an der Stelleinheit oder der Trageinheit, so dass die Gewindespindel durch die Antriebseinheit in Richtung der Gewindespindelachse translatorisch verschiebbar ist, indem die Spindelmutter von der Antriebseinheit drehend angetrieben wird. In beiden Ausführungen bildet der Spindeltrieb einen zwischen Trageinheit und Stelleinheit wirksamen motorischen Verstellantrieb, durch den die Stelleinheit zur Verstellung relativ zur Trageinheit verstellt werden kann.

Zur Realisierung einer Längenverstellung der Stelleinheit in Richtung der Längsachse der Lenkspindel kann ein Spindeltrieb eines Verstellantriebs zwischen der Stelleinheit und einer diese axial längsverschieblich aufnehmenden Manteleinheit, auch Führungskasten oder Kastenschwinge genannt, angeordnet sein, welche mit der Trageinheit verbunden ist, und wobei die Gewindespindelachse im Wesentlichen parallel zur Längsachse ausgerichtet sein kann. Zur Höhenverstellung kann ein Spindeltrieb zwischen der Trageinheit und einer daran höhenverschwenkbar gelagerten Stelleinheit oder Manteleinheit, in der die Stelleinheit aufgenommen ist, angeordnet sein. An einer Lenksäule können eine motorische Längs- und Höhenverstellung einzeln oder in Kombination ausgebildet sein.

Im Crashfall wird durch einen auf das Lenkrad auftreffenden Körper eine große Kraft auf die Stelleinheit ausgeübt, welche jeweils auf den Spindeltrieb der Verstelleinrichtung in Richtung der Gewindespindelachse wirkt, insbesondere auf den Spindeltrieb der Längsverstellung, welcher die in Längsrichtung von der Stelleinheit auf die Trageinheit ausgeübte Kraftspitze aufnehmen muss. Durch die dabei in Richtung der Gewindespindelachse wirkende Kraft kann die Gewindespindel in Richtung der Gewindespindelachse durch die Spindelmutter durchrutschen, die dabei in Drehung versetzt wird. Dies kann zu einer unkontrollierten Relativbewegung von Stell- und Trageinheit führen. Auch Energieabsorptionseinrichtungen, die zwischen Stelleinheit und Trageinheit zum kontrollierten Abbau der kinetischen Energie im Crashfall angeordnet sein können, können dabei in ihrer Wirksamkeit beeinträchtigt werden.

In Stand der Technik ist es aus der DE 195 24 196 C1 bekannt, an dem Spindeltrieb ein Energieabsorptionselement anzubringen, wodurch bei einer Relativbewegung von Gewindespindel und Spindelmutter im Crashfall Energie aufgenommen werden soll. Die dabei angestrebte Energieumwandlung setzt jedoch voraus, dass der Spindeltrieb nachgiebig ist, Gewindespindel und Spindelmutter also auch im Crashfall - wenn auch gedämpft - relativ zueinander beweglich sein müssen. Abgesehen davon, dass die erforderliche kontrollierte Abbremsung des Spindeltriebs nur mit großem Aufwand realisierbar ist, bleibt die vorgenannte Problematik des Durchrutschens bestehen.

Aus der DE 10 2011 083 190 A1 ist eine motorisch verstellbare Lenksäule gemäß dem Oberbegriff des Anspruchs 1 bekannt. Durch eine selbsthemmend ausgestaltete Gewindespindel des Verstellantriebs soll erreicht werden, dass im Crashfall keine unkontrollierte Relativbewegung von Stell- und Trageinheit auftritt. Die Selbsthemmung erfordert jedoch eine relativ hohe Gewindereibung, die auch im normalen Verstellbetrieb immer vorhanden ist und für eine relativ schwergängige Verstellung sorgt, so dass in nachteiliger Weise eine hohe Antriebsleistung erforderlich ist, oder nur eine geringe Verstellgeschwindigkeit ermöglicht wird. Eine Verringerung der Gewindereibung würde jedoch wieder die Gefahr des Durchrutschens oder Durchdrehens mit sich bringen.

Angesichts der vorangehend erläuterten Problematik ist es eine Aufgabe der vorliegenden Erfindung, eine verbesserte Lenksäule anzugeben, bei der ein Durchrutschen bzw. ein Durchdrehen des Spindeltriebs im Crashfall möglichst verhindert wird.

### Darstellung der Erfindung

Diese Aufgabe wird durch eine motorisch verstellbare Lenksäule für ein Kraftfahrzeug mit den Merkmalen des Anspruchs 1 gelöst. Vorteilhafte Weiterbildungen ergeben sich aus den Unteransprüchen.

Erfindungsgemäß wird für eine gattungsgemäße Lenksäule mit den eingangs genannten Merkmalen vorgeschlagen, dass der Verstellantrieb eine Blockiereinrichtung aufweist, die eine Lösestellung und eine Blockierstellung einnehmen kann, und die im Crashfall aktiviert wird und in eine Blockierstellung bringbar ist zur Blockierung der Gewindespindel relativ zur Spindelmutter.

Die erfindungsgemäße Blockiereinrichtung kann eine Löse- bzw. Freigabestellung und eine Blockier- bzw. Sperrstellung einnehmen. Im normalen Betriebszustand befindet sie sich in Lösestellung, wobei die Gewindespindel und die Spindelmutter relativ zueinander drehbar sind und eine ungehinderte Verstellung des Spindeltriebs durch die Antriebseinheit erfolgen kann. Im Crashfall wird die Blockiereinrichtung aktiviert und in die Blockierstellung gebracht, wodurch der Verstellantrieb in der eingestellten Verstellposition fixiert wird, so dass er dann eine starre Verbindung zwischen den im Normalbetrieb relativ zueinander verstellbaren Elementen der Lenksäule, nämlich der Stell- und Trageinheit und/oder der Manteleinheit, erzeugt. Dies wird dadurch erreicht, dass die Blockiereinrichtung in Eingriffsposition die Gewindespindel und die Spindelmutter relativ zueinander festsetzt, so dass der Spindeltrieb auch bei hohen Kraftspitzen im Crashfall nicht in Verstellrichtung nachgeben kann, also nicht durchrutscht, sondern ein starres Kraftübertragungselement bildet. Dadurch kann insbesondere sichergestellt werden, dass im Crashfall die in die Stelleinheit eingebrachte Kraft wie angestrebt im Wesentlichen vollständig in zwischen Stelleinheit und Trageinheit angeordnete Energieabsorptionseinrichtungen eingeleitet wird, so dass eine optimale, kontrollierte Energieabsorption ermöglicht wird.

Die erfindungsgemäße Ausgestaltung ist insbesondere in solchen Ausführungsformen von Lenksäulen vorteilhaft, bei denen zwischen der Stelleinheit und der Trageinheit eine Energieabsorptionseinrichtung angeordnet ist. Derartige Energieabsorptionseinrichtungen sind in unterschiedlichen Ausführungsformen bekannt, und weisen mindestens ein Energieabsorptionselement auf, welches zum einen an einem karosseriefesten Bauteil der Trageinrichtung, oder einer daran gehaltenen Manteleinheit, und zum anderen an einem zusammen mit dem Lenkrad relativ zur Karosserie im Crashfall verschiebbaren Bauteil, beispielsweise der Stelleinheit oder dergleichen, befestigt ist. Das Energieabsorptionselement umfasst zumindest ein Deformationselement, welches im Kraftfluss zwischen nur im Crashfall gegeneinander bewegten Bauteilen eingesetzt ist, und die im Crashfall eingeleitete Energie über den Verschiebeweg der Relativbewegung in eine definierte plastische Verformung des Deformationselements umgesetzt wird, so dass eine kontrollierte, über den Verschiebeweg vergleichmäßigte Abbremsung erfolgt. Ein Deformationselement kann beispielsweise als Biegelasche ausgebildet sein, die über einen Verschiebeweg der Stelleinheit relativ zur Trageinheit kontiniuierlich umgebogen wird, oder als Reisslasche, die durch die Relativbewegung im Crashfall aufgetrennt wird, oder als kombinierte Biege-Reisslasche. Es ist ebenfalls bekannt, zur Energieabsorption ein Langloch durch einen im Crashfall darin entlangbewegten Gleitstein oder Dorn über seine Länge plastisch aufzuweiten, durch einen bewegten Meissel ein Crashelement zu zerspanen, oder auf andere Art und Weise kinetische Energie in plastische Verformung eines Deformationselements (Verformungsarbeit) umzusetzen.

Es ist möglich, dass eine Energieabsorptionseinrichtung im Kraftfluss zwischen Verstellantrieb und Trageinheit oder zwischen Verstellantrieb und Stelleinheit angeordnet ist. Dabei ist zumindest ein Energieabsorptionselement bezüglich der Kraftübertragung im Crashfall in Reihe mit dem Spindeltrieb zwischen der Trageinheit und der relativ dazu bewegten Stelleinheit angebracht, beispielsweise in Richtung der Längsachse zwischen einer Manteleinheit und der darin in Längsrichtung teleskopierbar aufgenommenen Stelleinheit. Durch die im Crashfall in Eingriff gebrachte Blockiereinrichtung wird die Verstelleinrichtung blockiert bzw. gesperrt und in ihrer momentanen Verstellposition starr festgesetzt, so dass die in die Stelleinheit eingeleitete Kraft über den gesperrten Spindeltrieb im Wesentlichen vollständig in das Energieabsorptionselement eingeleitet wird. Dadurch ist gewährleistet, dass der für die Energieabsorption zur Verfügung stehende Verschiebeweg nicht wie im Stand der Technik durch ein Durchrutschen des Spindeltriebs verkürzt wird, sondern in voller Länge zur kontrollierten Energieumwandlung im Energieabsorptionselement erhalten bleibt, wodurch das Sicherheitsniveau erhöht wird.

Es ist vorteilhaft, dass die Blockiereinrichtung in Blockierstellung eine Drehung der Gewindespindel relativ zur Spindelmutter blockiert. Die Fixierung der relativen Verdrehung von Gewindespindel und Spindelmutter bewirkt eine Fixierung der eingestellten Längsposition des Spindeltriebs. Dabei ist von Vorteil, dass aufgrund der Kraftübersetzung des Spindeltriebs eine Fixierung der Spindelmutter mit einer relativ kleinen Haltekraft bereits ausreicht, um eine Längenveränderung des Spindeltriebs auch bei einer hohen Krafteinwirkung im Crashfall zu sperren. Beispielsweise kann in einer Ausführung die im normalen Verstellbetrieb drehbar antreibbare Spindelmutter durch Eingriff der Blockiereinrichtung im Crashfall bezüglich ihrer Drehung um die Gewindespindelachse fest gehalten werden, wodurch der Spindeltrieb blockiert wird. Die Fixierung kann einfach durch eine Festlegung der Spindelmutter an der Trageinheit oder einer davon getragenen Manteleinheit erfolgen. In alternativen Ausführungen ist es möglich, dass die Drehung der Gewindespindel durch die Blockiereinrichtung relativ zur Trag- oder Manteleinheit blockiert wird.

Die Blockiereinrichtung kann in Blockierstellung miteinander in Eingriff bringbare Blockier-elemente aufweisen. Im normalen Betrieb befinden sich die Blockierelemente in Lösestellung außerhalb des Eingriffs, und können sich frei relativ zueinander bewegen. Im Crashfall werden korrespondierende Blockierelemente miteinander in Eingriff gebracht, wodurch die Bauteile, an denen die Blockierelemente angebracht sind, beispielsweise an Trag-, Mantel- und/oder Stelleinheit, relativ zueinander fixiert und somit blockiert werden.

Erfindungsgemäße Blockierelemente können an der Spindelmutter und/oder der Trageinheit und/oder der Gewindespindel und/oder der Stelleinheit angeordnet sein. Dabei sind sie bevorzugt paarweise an den erfindungsgemäß in Blockierstellung miteinander zu fixierenden Bauteilen befestigt, beispielsweise an der Spindelmutter und der Trageinheit oder einer daran gehaltenen Manteleinheit, um die Spindelmutter bezüglich einer Drehung um die Gewindespindelachse relativ zur Trageinheit festzulegen. Alternative Anordnungen der Blockierlemente sind ebenfalls möglich, welche im Crashfall ineinander eingreifen und dann eine relative Drehung von Bauteilen des Spindeltriebs verhindern.

Es kann vorgesehen sein, dass die Blockierelemente als Formschlusselemente und/oder Kraftschlusselemente ausgebildet sind. Formschlusselemente können beispielsweise miteinander korrespondierende Verzahnungen, Einrastelemente oder dergleichen aufweisen die im Crashfall zur Bildung einer formschlüssigen Verbindung miteinander in Eingriff gebracht werden. Alternativ oder in Kombination können Kraftschlusselemente ausgebildet sein, welche im Crashfall reibschlüssig miteinander in Kontakt gebracht werden, um eine bezüglich der auftretenden Kräfte feste Verbindung zu erzeugen und eine Blockierung zu bewirken. Für eine zuverlässige Halte- und Blockierwirkung können die Kraftschlusselemente reibungserhöhend ausgestaltet sein, beispielsweise durch geeignete Rauigkeiten und/oder Materialpaarungen.

Eine vorteilhafte Ausführung der Erfindung kann dadurch erreicht werden, dass die Blockierelemente zur Erzeugung der Blockierstellung axial in Richtung der Gewindespindelachse miteinander in Eingriff bringbar sind. Im Crashfall wirken hohe Kräfte in Richtung der Gewindespindelachse auf den Spindeltrieb, die dazu genutzt werden können, Blockierelemente an beweglichen bzw. drehbaren Elementen des Spindeltriebs mit relativ dazu feststehenden, korrespondierenden Blockierelementen formschlüssig und/oder kraftschlüssig miteinander in Eingriff zu bringen, um erfindungsgemäß eine feste Verbindung zu erzeugen. Dadurch ist es möglich, dass die Blockiereinrichtung im Crashfall durch die dann in axialer Richtung wirkenden Kräfte selbsttätig aktiviert wird.

Es kann weiterhin vorteilhaft sein, dass die Blockiereinrichtung ein Sicherungselement aufweist. Dieses ist gegen die Blockierstellung gerichtet, womit gemeint ist, dass die Blockiereinrichtung durch das Sicherungselement im normalen Betrieb der Lenksäule in Lösestellung gehalten wird, und durch die im normalen Betrieb auftretenden Kräfte keine unbeabsichtigte Aktivierung der Blockiereinrichtung erfolgen kann. Ausschließlich dann, wenn die im Crashfall wirkenden hohen Kräfte einen vorgegebenen Schwellenwert, bevorzugt größer als 1kN, überschreiten, kann das Sicherungselement überwunden werden, um die Blockiereinrichtung in Blockierstellung in Eingriff zu bringen. Ein Sicherungselement kann beispielsweise ein elastisches Federelement aufweisen, welches bei den im normalen Betrieb auf den Spindeltrieb einwirkenden Kräften miteinander korrespondierende Blockierelemente, beispielsweise Form- und/oder Kraftschlusselemente, durch die Federkraft außerhalb des Eingriffs auf Abstand zueinander hält. Ausschließlich durch die im Crashfall auftretenden hohen Kräfte wird das Federelement so stark zusammengepresst, dass die Blockierelemente miteinander in Eingriff kommen und die Blockiereinrichtung aktiviert wird. Alternativ oder zusätzlich kann das Sicherungselement ein Sollbruchelement aufweisen, welches im Crashfall zerstört wird und den Eingriff der Blockiereinrichtung ermöglicht.

Eine vorteilhafte Ausführung kann dadurch realisiert werden, dass die Spindelmutter drehbar in einem mit der Trageinheit verbundenen Lagergehäuse gelagert ist, wobei die Spindelmutter und das Lagergehäuse korrespondierende, miteinander in Eingriff bringbare Blockierelemente aufweisen. Bevorzugt kann die Spindelmutter in dem Lagergehäuse in Richtung der Gewindespindelachse axial verschiebbar gelagert sein. In dieser Ausführung ist die Spindelmutter von der Antriebseinheit der Verstelleinrichtung zum Verstellen drehend antreibbar, beispielsweise dadurch, dass die Spindelmutter als Schneckenrad ausgebildet ist, welches mit einer Schnecke in Eingriff steht, die von der Antriebseinheit drehend antreibbar ist. Die Spindelmutter und das Lagergehäuse weisen korrespondierende Blockierelemente auf, die in axialer Richtung, dies ist die Richtung der Gewindespindelachse, miteinander in Eingriff bringbar sind, so dass die Spindelmutter bezüglich einer Drehung um die Gewindespindelachse an der Trageinheit festgelegt wird, und damit bezüglich eine Drehung relativ zur Gewindespindel blockiert ist. Diese Blockierstellung kann dadurch aktiviert werden, dass die Spindelmutter in dem Lagergehäuse unter Einwirkung einer im Crashfall über die Gewindespindel in die Spindelmutter ausgeübten Kraft axial verschoben wird. Zwischen der Spindelmutter und dem Lagergehäuse kann ein in axialer Richtung wirksames Sicherungselement angeordnet sein, beispielsweise ein Federelement, welches die Blockierelemente entgegen ihrer axialen Eingriffsrichtung in Lösestellung hält. Erst wenn im Crashfall die in axialer Richtung auf den Spindeltrieb ausgeübte Kraft einen vorgegeben Grenzwert überschreitet, werden die Blockierelemente entgegen der Federkraft miteinander in Eingriff gebracht. Das Sicherungselement kann alternativ oder zusätzlich ein Sollbruchelement umfassen, welches im Crashfall bricht und den gegenseitigen Eingriff der Blockierelemente in axialer Richtung der Gewindespindelachse freigibt.

Die Stelleinheit kann bevorzugt in einer Manteleinheit in Richtung der Längsachse teleskopierend verstellbar aufgenommen sein, wobei der Verstellantrieb zwischen Stelleinheit und Manteleinheit angeordnet ist. Dadurch wird eine teleskopierende Längsverstellung zur Verfügung gestellt, wobei ein zwischen Stelleinheit und Manteleinheit (Führungskasten, Kastenschwinge) angeordneter Gewindetrieb erfindungsgemäß mit einer Blockiereinrichtung ausgestaltet ist.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: eine schematische perspektivische Teilansicht der Lenksäule gemäß Figur 1,
- Figur 3: einen Längsschnitt entlang der Gewindespindelachse durch den Spindeltrieb der Lenksäule gemäß Figur 1 und 2 im normalen Betriebszustand,
- Figur 4: eine Ansicht wie in Figur 3 während einem Crashfall,
- Figur 5: einen Längsschnitt entlang der Gewindespindelachse durch eine zweite Ausführungsform eines Spindeltriebs der Lenksäule gemäß Figur 1 und 2 im normalen Betriebszustand,
- Figur 6: eine Ansicht wie in Figur 5 während einem Crashfall,
- Figur 7: einen Längsschnitt entlang der Gewindespindelachse durch eine dritte Aus-führungsform eines Spindeltriebs.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

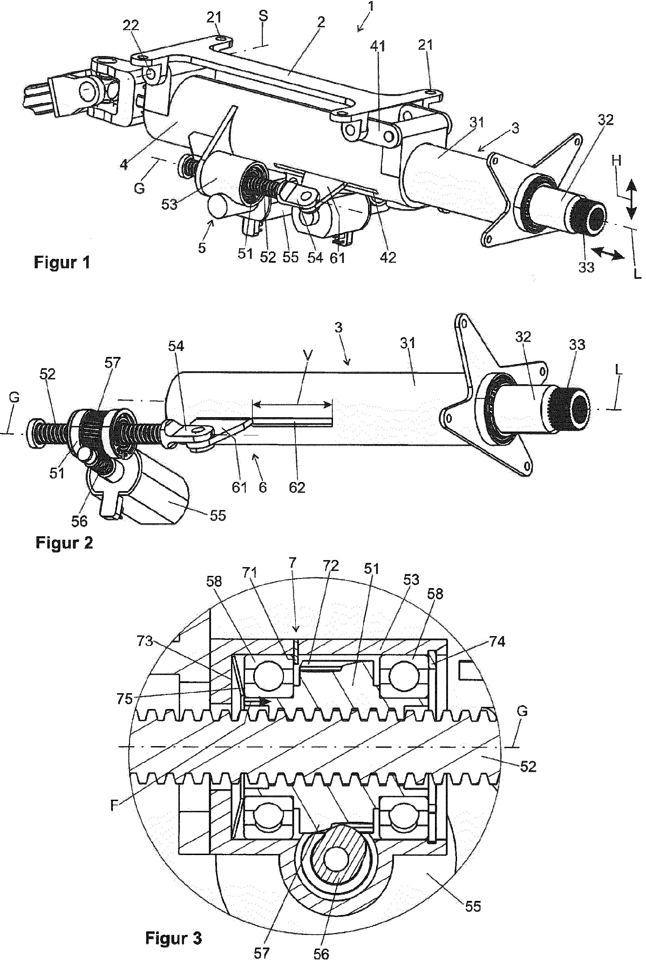

Figur 1 zeigt eine erfindungsgemäße Lenksäule 1 in einer schematischen perspektivischen Ansicht von seitlich oben schräg auf das hintere Ende, bezogen auf die Fahrtrichtung eines nicht dargestellten Fahrzeugs, wo ein hier nicht dargestelltes Lenkrad im Bedienungsbereich gehalten wird.

Die Lenksäule 1 umfasst eine Trageinheit 2, welche als Konsole ausgebildet ist, die Befestigungsmittel 21 in Form von Befestigungsbohrungen aufweist, zur Anbringung an einer nicht dargestellten Fahrzeug-Karosserie. Von der Trageinheit 2 wird eine Stelleinheit 3 gehalten, die in einer Manteleinheit 4 - auch als Führungskasten oder Kastenschwinge bezeichnet -aufgenommen ist.

Die Stelleinheit 3 weist ein Mantelrohr 31 auf, in dem eine Lenkspindel 32 um eine Längsachse L drehbar gelagert ist, die sich axial in Längsrichtung erstreckt. Am hinteren Ende in an der Lenkspindel 32 ein Befestigungsabschnitt 33 ausgebildet, an dem ein nicht dargestelltes Lenkrad anbringbar ist.

Die Stelleinheit 3 kann zur Realisierung einer Längenverstellung in der Manteleinheit 4 in Richtung der Längsachse L teleskopartig verschiebbar aufgenommen, um das mit der Lenkspindel 32 verbundene Lenkrad relativ zur Trageinheit 2 in Längsrichtung vor und zurück positionieren zu können, wie mit dem Doppelpfeil parallel zur Längsachse L angedeutet.

Die Manteleinheit 4 ist um eine quer zur Längsachse L liegende, horizontale Schwenkachse S verschwenkbar in einem Schwenklager 22 an der Trageinheit 2 gelagert. Im hinteren Bereich ist die Manteleinheit 4 über einen Stellhebel 41 mit der Manteleinheit 4 verbunden. Durch eine Drehbewegung des Stellhebels 41 mittels eines hier nicht dargestellten Stellantriebs kann die Manteleinheit 4 um die Schwenkachse S verschwenkt werden, wodurch eine Verstellung eines an dem Befestigungsabschnitt 33 angebrachten Lenkrads in Höhenrichtung H vorgenommen werden kann, was mit dem Doppelpfeil angedeutet ist.

Ein Verstellantrieb 5 weist einen Spindeltrieb mit einer Spindelmutter 51 auf, in die eine sich längs ihrer Gewindespindelachse G erstreckende Gewindespindel 52 eingreift, also mit ihrem Außengewinde in das korrespondierende Innengewinde der Spindelmutter 51 eingeschraubt ist. Die Gewindespindelachse G verläuft im Wesentlichen parallel zur Längsachse L.

Die Spindelmutter 51 ist um die Gewindespindelachse G drehbar in einem Lagergehäuse 53 gelagert, welches fest mit der Manteleinheit 4 verbunden ist. In Richtung der Gewindespindelachse G stützt sich die Spindelmutter 51 axial über das Lagergehäuse 53 an der Mantel-einheit 4 ab.

Die Gewindespindel 52 ist mit einem an ihrem hinteren Ende ausgebildeten Befestigungselement 54 über eine Energieabsorptionseinrichtung 6 mit der Stelleinheit 3 verbunden, und zwar fest in Richtung der Gewindespindelachse G bzw. der Längsachse L und feststehend bezüglich Drehung um die Gewindespindelachse G. Dies ist der Darstellung in Figur 2 entnehmbar, in der die Manteleinheit 4 und das Lagergehäuse 53 zur besseren Übersicht weggelassen sind.

Die Gewindespindel 52 ist über das Befestigungselement 54 mit einem Übertragungselement 61 verbunden, welches seinerseits mit der Stelleinheit 3 verbunden ist. Dazu greift das Übertragungselement 61 in das vordere Ende eines Deformationsschlitzes 62 ein, der sich über die Länge eines Verschiebewegs V außen in dem Mantelohr 31 der Stelleinrichtung 3 parallel zur Längsachse L nach hinten erstreckt. Das Übertragungselement 61 ist im Zusammenwirken mit dem Deformationsschlitz 62 dazu geeignet, im Crashfall Energie zu absorbieren, d.h. in der Energieabsorptionseinrichtung 6 bei einer im Crashfall in Längsrichtung zwischen der Stelleinheit 3 und der Gewindespindel 52 auftretenden Relativbewegung kinetische Energie in plastische Deformation des Mantelrohrs 31 im Bereich des Deformationsschlitzes 62 umzuwandeln, wie im Folgenden noch erläutert wird.

Dass Übertragungselement 61 erstreckt sich von der Stelleinheit 3 durch eine schlitzförmige Durchgangsöffnung 42 in der Manteleinheit 4. Zur Verstellung der Lenksäule 1 kann das Übertragungselement 61 frei in der Durchgangsöffnung 42 in Längsrichtung entlangbewegt werden.

Zur motorischen Verstellung weist der Verstellantrieb 5 einen elektrischen Stellmotor 55 auf, von dem eine Schnecke 56 drehend antreibbar ist, welche in eine außen auf der Spindelmutter 51 koaxial zur Gewindespindelachse G umlaufende Verzahnung 57 eingreift. Über das derart gebildete Schneckengetriebe ist die Spindelmutter 51 von dem Stellmotor 55 bezüglich der Gewindespindelachse G relativ zur feststehenden Gewindespindel 52 drehend antreibbar. Dadurch kann - je nach Drehrichtung des Stellmotors 55 - die Gewindespindel 52 in Richtung der Gewindespindelachse G translatorisch relativ zur Spindelmutter 51 verlagert werden, und entsprechend wird die mit der Gewindespindel 52 verbundene Stelleinrichtung 3 relativ zu der mit der Spindelmutter 51 verbundenen Manteleinheit 4 in Richtung der Längsachse L verstellt.

Figur 3 zeigt einen Längsschnitt entlang der Gewindespindelachse G durch den Verstellantrieb 5 im Bereich des Lagergehäuses 53. Darin ist erkennbar, dass die Spindelmutter 51 in zwei Radiallagern 58, die im dargestellten Beispiel als Kugellager ausgebildet sind, bezüglich Rotation um die Gewindespindelachse G drehbar in dem Lagergehäuse 53 gelagert ist.

Eine erfindungsgemäße Blockiereinrichtung 7 umfasst ein erstes Blockierelement 71, welches fest in dem Lagergehäuse 53 angeordnet ist, und zwar axial, in Richtung der Gewindespindelachse G einem zweiten Blockierelement 72 gegenüberliegend, welches an der Spindelmutter 51 ausgebildet ist.

In Figur 3 ist die Löse- oder Freigabestellung der Blockiereinrichtung 7 dargestellt, was daran erkennbar ist, dass die Blockierelemente 71 und 72 axialen Abstand voneinander haben, und nicht in Eingriff miteinander stehen. Entsprechend ist die Spindelmutter 51 im Lagergehäuse 53 um die Gewindespindelachse G frei drehbar, und kann zur Verstellung der Lenksäule 1 von dem Stellmotor 55 drehend angetrieben werden.

Wie oben erläutert, stützt sich die Spindelmutter 51 in dem Lagergehäuse 53 in Richtung der Gewindespindelachse G bzw. der dazu im Wesentlichen parallelen Längsachse L ab. Um eine Aktivierung der Blockiereinrichtung 7 zu ermöglichen, kann die Spindelmutter 51 axial in Richtung der Gewindespindelachse G in dem Lagergehäuse 53 zwischen zwei axialen Widerlagern 73 und 74, die durch innen gegen die Spindelmutter 51 gerichtete Axialflächen gebildet werden, verlagert werden.

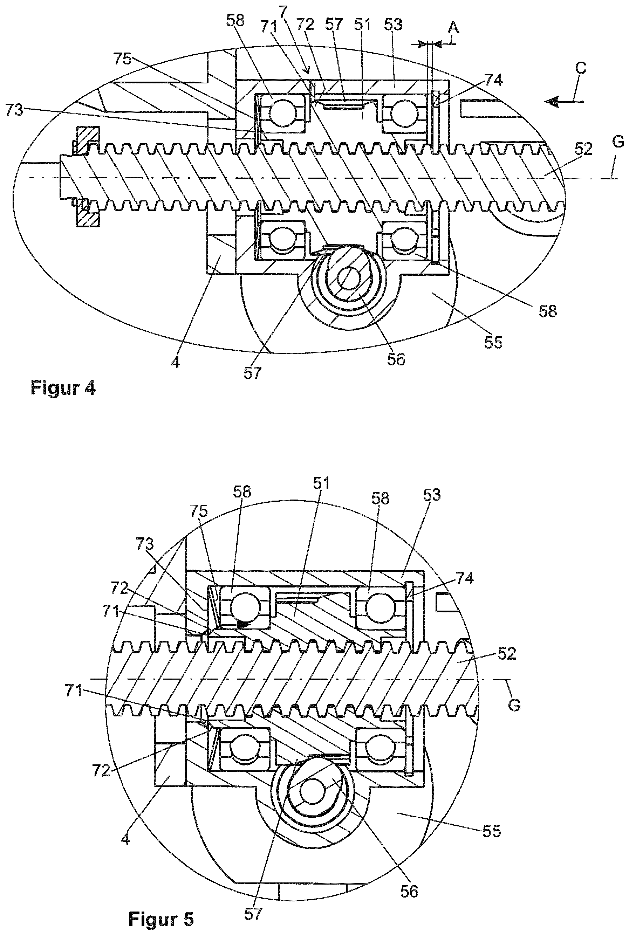

Die in Figur 3 dargestellte Lösestellung wird im normalen Betriebszustand dadurch eingehalten, dass ein als Federelement 75, konkret als konische Tellerfeder, ausgebildetes Sicherheitselement sich an dem ersten Widerlager 73, in der Darstellung links, abstützt, und die Spindelmutter 51 in axialer Richtung der Gewindespindelachse G, in der Zeichnung nach rechts, mit der Federkraft F gegen das zweite Widerlager 74 andrückt. Dadurch werden die besagten Blockierelemente 71 und 72 auf Abstand gehalten. Die Federkraft F des Federelements 75 wird so hoch gewählt, dass es unter den im Normalbetrieb auf die Stelleinheit 3 in Längsrichtung über das Lenkrad und während der Verstellung der Lenksäule 1 ausgeübten Kraft, die einen vorgegebenen Schwellenwert nicht überschreitet, nicht so weit komprimiert wird, so dass die Blockierelemente 71 und 72 nicht in Kontakt kommen können. Mit anderen Worten sichert das Federelement 75 die Blockiereinrichtung 7 in Lösestellung, indem es die Blockiereinrichtung 7 entgegen der Blockierstellung belastet, die in Figur 4 dargestellt ist.

Figur 4 zeigt eine vergleichbare Ansicht wie Figur 3, allerdings in der Situation während einem Crash. Dabei ist auf die Gewindespindel 52 in Richtung der Gewindespindelachse G eine Crash-Kraft C ausgeübt worden, und zwar entgegen die Federkraft F des Federelements 75 gerichtet, auf das Widerlager 73 zu gerichtet, dies ist in der Zeichnung nach links. Dadurch wurde das Federelement 75 zusammengepresst und die Spindelmutter 51 um einen Abstand A, welcher die axiale Verlagerbarkeit der Spindelmutter 51 in dem Lagergehäuse 53 angibt, auf das Widerlager 73 zu nach links bewegt. Dabei ist das erste Blockierelement 71 axial mit dem zweiten Blockierelement 72 in Eingriff gebracht worden. Dadurch wird die Drehung der Spindelmutter 51 in dem Lagergehäuse blockiert. Das wird beispielsweise dadurch erreicht, dass das erste Blockierelement 71 ein fest von dem Lagergehäuse 53 nach innen vorstehendes Formschlusselement bildet, welches durch die axiale Verschiebung in ein auf der Außenseite oder stirnseitig ausgebildetes Blockierelement 72, welches ein korrespondierendes Formschlusselement bildet, an der Spindelmutter 51 formschlüssig eingreift. Beispielsweise kann das Blockierelement 71 durch einen Stift oder Nocken gebildet werden, der in die Verzahnung 57 eingreift, und dadurch die Drehung der Spindelmutter 51 in dem Lagergehäuse 53 sperrt.

Durch die Blockierung der Spindelmutter 51 in dem Lagergehäuse 53 wird die relative Drehung von Gewindespindel 52 und Spindelmutter 51 erfindungsgemäß blockiert. Der Verstellantrieb 5 wird durch die im Crashfall wirkende Crash-Kraft C in der momentanen Verstellposition fixiert. Entsprechend kann die Gewindespindel 52 auch bei extrem hohen Kräften C nicht mehr in Richtung der Gewindespindelachse G durch die Spindelmutter 51 durchrutschen, der Verstellantrieb 5 bildet folglich eine starre Verbindung zwischen der Manteleinheit 4, der Energieabsorptionseinrichtung 6 und der Stelleinheit 3.

Entsprechend wird im Crashfall die eingebrachte kinetische Energie über die Gewindespindel 52 auf das Übertragungselement 61 übertragen. Das Übertragungselement 61 hat eine größere Breite als der Deformationsschlitz 62, in den es eingesetzt ist. Durch die ausschließlich im Crashfall in Längsrichtung wirkende hohe Kraft, die größer ist als der Schwellenwert, der durch die Federkraft F vorgegebenen Auslösekraft der Blockiereinrichtung 7, wird das Übertragungselement 61 in Längsrichtung durch den Deformationsschlitz 62 gezwängt, der dabei unter plastischer Deformation aufgeweitet wird. Dank der Erfindung liegt in jedem Fall die volle im Crashfall auftretende Kraftspitze an der Energieabsorptionseinrichtung 6 an, so dass der angestrebte, möglichst gleichmäßige Energieabbau über den gesamten Verstellweg V erfolgen kann.

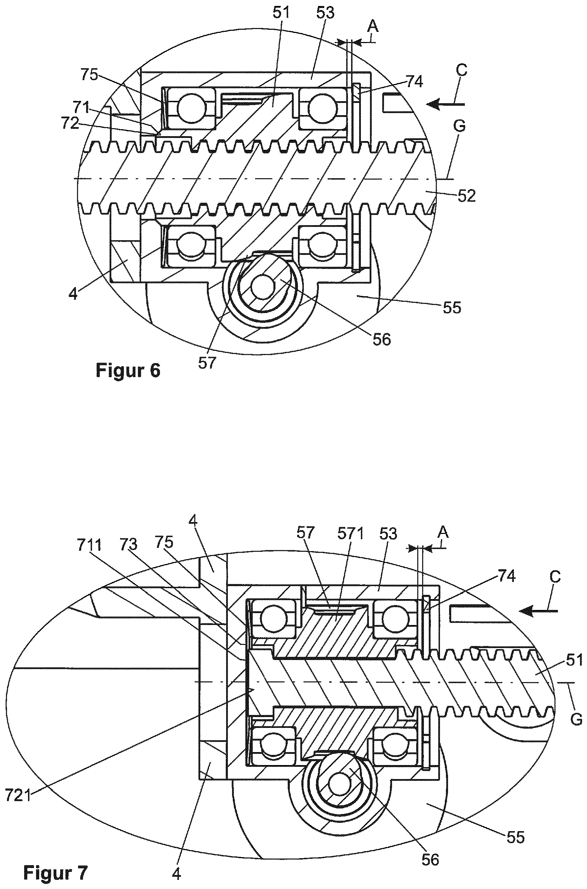

Die Figuren 5 und 6 zeigen eine weitere Ausführungsform der Erfindung, in Figur 5 in Lösestellung, und in Figur 6 in Blockierstellung. Der Aufbau und die Funktion entsprechen der in Figuren 3 und 4 dargestellten Ausführung mit dem Unterschied, dass die Blockierelemente 71 und 72 an stirnseitigen, konischen Kontaktflächen angeordnet sind, und zwar das Blockierelement 71 an einem konzentrischen Innenkonus im Lagergehäuse 53, und das Blockierelement 72 an einem dazu koaxialen Kegelabschnitt an der Spindelmutter 51. Die Blockierelemente können beispielsweise als Kraftschlusselemente ausgebildet sein, welche einen so hohen Reibwert haben, dass eine Blockierung der Spindelmutter 51 im Lagergehäuse 53 im Crashfall gewährleistet ist. Es können alternativ oder zusätzlich stirnseitige, axiale Formschlusselemente vorgesehen sein, die in der in Figur 6 gezeigten Blockierstellung formschlüssig miteinander verbunden sind, beispielsweise ineinander greifende Verzahnungen oder dergleichen.

Figur 7 zeigt eine alternative Ausführungsform, bei der anstelle der Spindelmutter 51 die Verzahnung 57 an einem Schneckenrad 571 ausgebildet ist, welches drehfest mit der Gewindespindel 52 verbunden ist. Durch den Stellmotor 55 ist folglich die Gewindespindel 51 zur Verstellung um die Gewindespindelachse G an der Manteleinheit 4 abgestützt.

In der in Figur 7 dargestellten Situation ist die Einwirkung einer Crash-Kraft C erfolgt, wie in Figur 4 oder 6. Dadurch wurde zusammen mit der Gewindespindel 51 das Schneckenrad 571 in dem Lagergehäuse 53 entgegen der Federkraft des Federelements 75 in Richtung gegen das Widerlager 73 bewegt.

Auf der axialen Stirnseite der Gewindespindel 51 ist ein erfindungsgemäßes Blockierelement 721 angeordnet, welches als Kraft- und/oder Formschlusselement ausgebildet sein kann. Der besagten Stirnseite axial gegenüberliegend ist auf der geschlossenen Innenseite des Lagergehäuses 53 ist ein Blockierelement 711 angeordnet, welches mit dem Blockierelement 721 korrespondierend ausgebildet ist, beispielsweise als Kraft- und/oder Formschlusselement. Wenn im Crashfall wie dargestellt die Blockierelemente 711 und 721 im Crashfall in Eingriff gebracht werden, ist die Drehung der Gewindespindel 51 blockiert. Die hier nicht dargestellte Spindelmutter 51, in welche die Gewindespindel 52 eingreift, ist fest an der Stelleinheit 3 fixiert, so dass sie bei der Blockierung der Gewindespindel 52 in dem Lagergehäuse 53 ebenfalls bezüglich einer relativen Drehung blockiert ist. Dadurch ist ebenfalls wie bei den in Ausführungen gemäß den vorangehenden Figuren gewährleistet, dass der Spindeltrieb im Crashfall ein unnachgiebiges, starres Kraftübertragungselement zwischen Mantelrohr 4, Stelleinheit 3 und der Energieabsorptionseinrichtung 6 bildet. Daraus resultieren die beschriebenen Vorteile der Erfindung.

### Bezugszeichenliste

- 1: Lenksäule
- 2: Trageinheit
- 21: Befestigungsmittel
- 22: Schwenklager
- 3: Stelleinheit
- 31: Mantelrohr
- 32: Lenkspindel
- 33: Befestigungsabschnitt
- 4: Manteleinheit
- 41: Stellhebel
- 42: Durchgangsöffnung
- 5: Verstellantrieb
- 51: Spindelmutter
- 52: Gewindespindel
- 53: Lagergehäuse
- 54: Befestigungselement
- 55: Stellmotor
- 56: Schnecke
- 57: Verzahnung
- 571: Schneckenrad
- 58: Radiallager
- 6: Energieabsorptionseinrichtung
- 61: Übertragungselement
- 62: Deformationsschlitz
- 7: Blockiereinrichtung
- 71,711: Blockierelement
- 72,721: Blockierelement
- 73, 74: Widerlager
- 75: Federelement
- L: Längsachse
- H: Höhenrichtung
- G: Gewindespindelachse
- V: Verschiebeweg
- F: Federkraft
- C: Crash-Kraft
- A: Abstand

## Patentansprüche

1. Motorisch verstellbare Lenksäule (1) für ein Kraftfahrzeug, mit einer Trageinheit (2), die an einer Fahrzeugkarosserie anbringbar ist, und von der eine Stelleinheit (3) gehalten ist, in der eine Lenkspindel (32) um eine Längsachse (L) drehbar gelagert ist, und mit einem Verstellantrieb (5), der mit der Trageinheit (2) und mit der Stelleinheit (3) verbunden ist, und von dem die Stelleinheit (3) relativ zur Trageinheit (2) verstellbar ist, wobei der Verstellantrieb (5) eine Antriebseinheit (55) und eine in eine Spindelmutter (51) eingreifende Gewindespindel (52) mit einer Gewindespindelachse (G) aufweist, wobei die Gewindespindel (52) und die Spindelmutter (51) durch die Antriebseinheit (55) um die Gewindespindelachse (G) relativ zueinander drehend antreibbar sind, **dadurch gekennzeichnet,**
**dass** der Verstellantrieb (5) eine Blockiereinrichtung (7) aufweist, die eine Lösestellung und eine Blockierstellung einnehmen kann, und die im Crashfall aktiviert wird und in eine Blockierstellung bringbar ist zur Blockierung der Gewindespindel (52) relativ zur Spindelmutter (51).

2. Lenksäule nach Anspruch 1, **dadurch gekennzeichnet, dass** zwischen der Stelleinheit (3) und der Trageinheit (2) eine Energieabsorptionseinrichtung (6) angeordnet ist.

3. Lenksäule nach einem der vorangehenden Ansprüche, **dadurch gekennzeichnet, dass** die Blockiereinrichtung (7) in Blockierstellung eine Drehung der Gewindespindel (52) relativ zur Spindelmutter (51) blockiert.

4. Lenksäule nach einem der vorangehenden Ansprüche, **dadurch gekennzeichnet, dass** die Blockiereinrichtung (7) in Blockierstellung miteinander in Eingriff bringbare Blockierelemente (71, 72, 711, 721) aufweist.

5. Lenksäule nach Anspruch 4, **dadurch gekennzeichnet, dass** Blockierelemente (71, 72, 711, 721) an der Spindelmutter (51) und/oder der Trageinheit (2) und/oder der Gewindespindel (52) und/oder der Stelleinheit (3) angeordnet sind.

6. Lenksäule nach einem der Ansprüche 4 oder 5, **dadurch gekennzeichnet, dass** die Blockierelemente (71, 72, 711, 721) als Formschlusselemente und/oder Kraftschlusselemente ausgebildet sind.

7. Lenksäule nach einem der Ansprüche 4 bis 6, **dadurch gekennzeichnet, dass** die Blockierelemente (71, 72, 711, 721) zur Erzeugung der Blockierstellung axial in Richtung der Gewindespindelachse (G) miteinander in Eingriff bringbar sind.

8. Lenksäule nach einem der vorangehenden Ansprüche, **dadurch gekennzeichnet, dass** die Blockiereinrichtung (7) ein Sicherungselement (75) aufweist.

9. Lenksäule nach einem der vorangehenden Ansprüche, **dadurch gekennzeichnet, dass** die Spindelmutter (51) oder die Gewindespindel (52) drehbar in einem mit der Trageinheit (2) verbundenen Lagergehäuse (53) gelagert ist, wobei die Spindelmutter (51) oder die Gewindespindel (52) und das Lagergehäuse (53) korrespondierende, miteinander in Eingriff bringbare Blockierelemente (71, 72, 711, 721) aufweisen.

10. Lenksäule nach Anspruch 8, **dadurch gekennzeichnet, dass** die Spindelmutter (51) oder die Gewindespindel (52) in dem Lagergehäuse (53) in Richtung der Gewindespindelachse (G) axial verschiebbar gelagert ist.

## Claims

1. A motor-adjustable steering column (1) for a motor vehicle, having a supporting unit (2) which can be attached to a vehicle body and by which there is held an adjusting unit (3) in which a steering spindle (32) is mounted so as to be rotatable about a longitudinal axis (L), and having an adjustment drive (5) which is connected to the supporting unit (2) and to the adjusting unit (3) and by which the adjusting unit (3) is adjustable relative to the supporting unit (2), wherein the adjustment drive (5) comprises a drive unit (55) and a threaded spindle (52) which engages in a spindle nut (51) and which has a threaded spindle axis (G), wherein the threaded spindle (52) and the spindle nut (51) can be driven to rotate relative to one another about the threaded spindle axis (G) by means of the drive unit (55),
**characterized**
**in that** the adjustment drive (5) comprises a blocking device (7), which can assume a release and a blocking position, and which is activated in a crash situation and can be brought into a blocking position for blocking the threaded spindle (52) relative to the spindle nut (51).

2. The steering column as claimed in claim 1, **characterized in that** an energy absorption device (6) is arranged between the adjusting unit (3) and the supporting unit (2).

3. The steering column as claimed in either of the preceding claims, **characterized in that**, in the blocking position, the blocking device (7) blocks a rotation of the threaded spindle (52) relative to the spindle nut (51).

4. The steering column as claimed in one of the preceding claims, **characterized in that**, in the blocking position, the blocking device (7) comprises blocking elements (71, 72, 711, 721) which can be brought into engagement with one another.

5. The steering column as claimed in claim 4, **characterized in that** blocking elements (71, 72, 711, 721) are arranged on the spindle nut (51) and/or the supporting unit (2) and/or the threaded spindle (52) and/or the adjusting unit (3).

6. The steering column as claimed in either of claims 4 and 5, **characterized in that** the blocking elements (71, 72, 711, 721) are designed as form-fitting elements and/or force-fitting elements.

7. The steering column as claimed in one of claims 4 to 6, **characterized in that**, to produce the blocking position, the blocking elements (71, 72, 711, 721) can be brought into engagement with one another axially in the direction of the threaded spindle axis (G).

8. The steering column as claimed in one of the preceding claims, **characterized in that** the blocking device (7) comprises a securing element (75).

9. The steering column as claimed in one of the preceding claims, **characterized in that** the spindle nut (51) or the threaded spindle (52) is rotatably mounted in a bearing housing (53) connected to the supporting unit (2), wherein the spindle nut (51) or the threaded spindle (52) and the bearing housing (53) comprise corresponding blocking elements (71, 72, 711, 721) which can be brought into engagement with one another.

10. The steering column as claimed in claim 8, **characterized in that** the spindle nut (51) or the threaded spindle (52) is mounted in the bearing housing (53) so as to be axially displaceable in the direction of the threaded spindle axis (G).

## Revendications

1. Colonne de direction à réglage motorisé (1) pour un véhicule automobile, comprenant une unité porteuse (2) qui peut être mise en place sur une carrosserie de véhicule et est maintenue par une unité d'actionnement (3) dans laquelle un arbre de direction (32) est monté de manière à pouvoir tourner autour d'un axe longitudinal (L), et comprenant un dispositif d'entraînement de réglage (5) qui est relié à l'unité porteuse (2) et avec l'unité d'actionnement (3) et qui permet de régler l'unité d'actionnement (3) par rapport à l'unité porteuse (2), le dispositif d'entraînement de réglage (5) présentant une unité d'entraînement (55) et une broche filetée (52) venant en prise avec un écrou de broche (51) doté d'un axe de broche filetée (G), la broche filetée (52) et l'écrou de broche (51) pouvant être entraînés en rotation l'une par rapport à l'autre par l'unité d'entraînement (55) autour de l'axe de broche filetée (G),
**caractérisée en ce que** le dispositif d'entraînement de réglage (5) présente un équipement de blocage (7) qui peut occuper une position de déblocage et une position de blocage et qui est activé en cas de collision et peut être placé dans une position de blocage pour bloquer la broche filetée (52) par rapport à l'écrou de broche (51).

2. Colonne de direction selon la revendication 1, **caractérisée en ce qu'**un équipement d'absorption d'énergie (6) est disposé entre l'unité d'actionnement (3) et l'unité porteuse (2).

3. Colonne de direction selon l'une quelconque des revendications précédentes, **caractérisée en ce que** dans la position de blocage, l'équipement de blocage (7) bloque une rotation de la broche filetée (52) par rapport à l'écrou de broche (51).

4. Colonne de direction selon l'une quelconque des revendications précédentes, **caractérisée** en ce dans la position de blocage, l'équipement de blocage (7) présente des éléments de blocage (71, 72, 711, 721) pouvant être mis en prise les uns avec les autres.

5. Colonne de direction selon la revendication 4, **caractérisée en ce que** des éléments de blocage (71, 72, 711, 721) sont disposés sur l'écrou de broche (51) et/ou sur l'unité porteuse (2) et/ou sur la broche filetée (52) et/ou sur l'unité d'actionnement (3).

6. Colonne de direction selon l'une quelconque des revendications 4 et 5, **caractérisée en ce que** les éléments de blocage (71, 72, 711, 721) sont réalisés sous la forme d'éléments à assemblage par complémentarité de forme et/ou d'éléments à assemblage par adhérence.

7. Colonne de direction selon l'une quelconque des revendications 4 à 6, **caractérisée en ce que** les éléments de blocage (71, 72, 711, 721) peuvent être mis en prise les uns avec les autres, axialement en direction de l'axe de broche filetée (G), pour créer la position de blocage.

8. Colonne de direction selon l'une quelconque des revendications précédentes, **caractérisée en ce que** l'équipement de blocage (7) présente un élément d'arrêt (75) .

9. Colonne de direction selon l'une quelconque des revendications précédentes, **caractérisée en ce que** l'écrou de broche (51) ou la broche filetée (52) est monté(e) pivotant(e) dans un boîtier de palier (53) relié à l'unité porteuse (2), l'écrou de broche (51) ou la broche filetée (52) et le boîtier de palier (53) présentant des éléments de blocage (71, 72, 711, 721) correspondants, pouvant être mis en prise les uns avec les autres.

10. Colonne de direction selon la revendication 8, **caractérisée en ce que** l'écrou de broche (51) ou la broche filetée (52) est monté(e) axialement coulissant (e) dans le boîtier de palier (53) en direction de l'axe de broche filetée (G).
